# EUROPEAN PATENT APPLICATION

(11) **EP 2 767 726 A1**
(43) Date of publication of application: **20.08.2014**
(21) Application number: 13004689.9
(22) Date of filing: 27.09.2013
(51) Int. Cl.: F16D 55/226

(54) **Innovation at trailer disc brake carriers**

(30) Priority: 06.08.2012 TR 201209143
(71) Applicant: Ege Fren Sanayi ve Ticaret Anonim Sirketi, Izmir (TR)
(72) Inventor: Isbilir, Akin, Bornova Izmir (TR); Yilmaz, Baris, Bornova Izmir (TR)

(57) **Abstract**

The invention relates to innovation on air disc brake carriers that are used on heavy commercial vehicles and trailers. The invention relates to air disc brake carriers (10) that optimise strenght, compatibility, security, productivity on manufacturing and reduce the total weight and cost of brake by the elements of carrier (10), abutments (11), triangular face on abutments (11.1), outboard bridge (12), flat clamping surface (12.1) on outboard bridge (12), mounting flange (13), mitigation gaps (15), inboard/outboard bridge links (16), inboard bridge (17), side sections (18) and abutment transition (19).

## Description

### TECHNICAL FIELD

The invention relates to innovation on air disc brake carriers that are used on heavy commercial vehicles and trailers.

Said invention relates to increasing the safety and production efficiency and also decreasing the total weight of the component and cost, also increasing the strenght by means of innovations on air disc brake carrier and abutments on carrier, triangular abutment surfaces, outboard bridge, flat clamping surface on outboard bridge, carrier flange, weight saving sections, bridge transition sections, inboard bridge, side supports, abutment transition sections.

### STATE OF ART

Air brake system type is a system that stops the vehicle by converting the air pressure to mechanical force when commanded by the foot pedal of vehicles that produce compressed air internally. As it is impossible to transfer the mechanical force applied on the pedal to the wheels of vehicles such as trucks and tractors, compressed air travels to wheeled to create a mechanical force in the brake by using pneumatic force. Air brake mechanism is one of the most important mechanisms used on the commercial vehicles. Therefore innovations are required to provide long component life and secure brake operation. The carrier of the air disc brake is the component that carries the braking loads, connects the brake assembly to the vehicle and all other brake components are assembled on the carrier.

Carrier on existing application is only suitable for 22.5 inch wheels and used with 434mm rotors and cannot be assembled to the trailer axles that have 430mm rotor. This non-compliance is caused by the design of existing carrier. It is impossible to install this brake to existing trailers without design changes on the torque plate, brake rotor and hub.

In current practice, the production efficiency is negatively affected by the large amount of machined surfaces which cause higher machine tool wear, higher coolant consumptions and machining duration.

The total weight and cost of the current brake is high due to high weight of the current carrier.

In current practice the flange surface area of the carriers is wide. Therefore the weight and the cost of the part is high.

In current practice the flange surface of the carrier has a sharp edged form. This form increases the machining duration, the tool wear and the coolant consumption.

In current practice the clamping spot located at the outboard bridge, reduces the strength of the part. Also security a security risk exits because low position of the outboard bridge causes inadequate safety gap between rotor and carrier.

In current practice, the sections of the inboard bridge that are close the flange are weak and the central section is too strong. This causes low strenght and stress concentration areas.

In current practice, weight reduction sections that are located near abutments, have small volume. Also the transition sections between the abutments and body are weakened by a large radius. This shape may cause unwanted contact between the pads and the bridge. If small radius is used, stress concentrations will form in this section.

In current practices, there are no supports on the sides of the carriers. The supports are required on these sections because the directions of stress vectors are suddenly change and the stress is amplified.

In current practices, there are sharp edges on the top of abutments. These sharp edges causes unnecessary weight and machining cost.

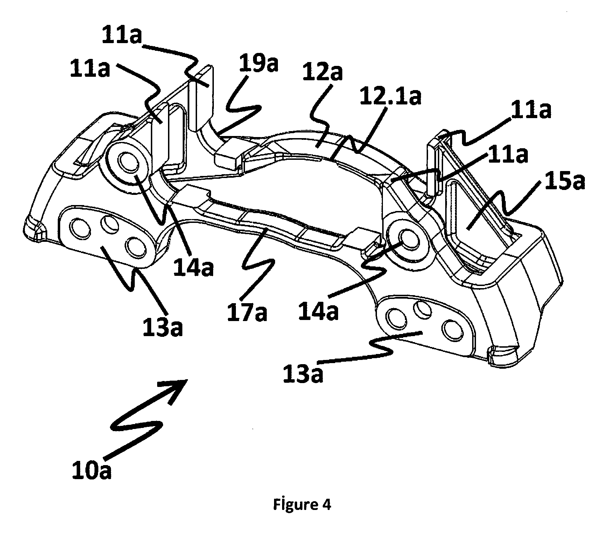

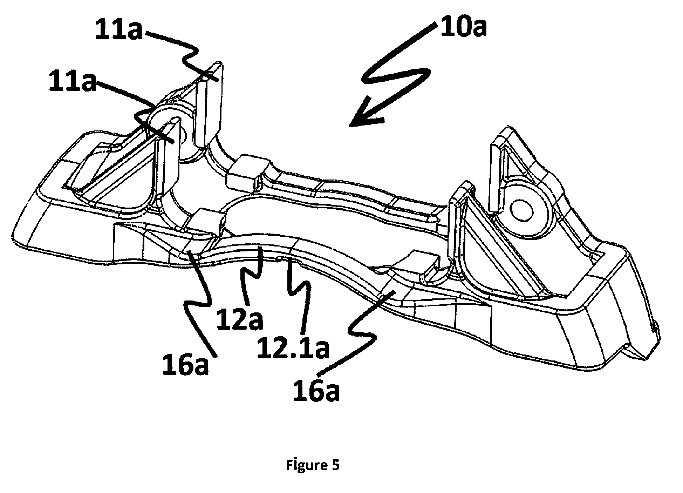

The current carrier that has flaws explained above is shown in Figure 4 and 5 and explained in details in section of invention explanation.

The patent numbered BRP10905113A2 is investigated. The patent is related to single piston caliper brake carrier for low tonnage commercial vehicles. The outboard bridge has a clamping spot that weakens the component strenght. The abutment transition areas have a cascaded sections. This section causes unnecessary weight and cost.

The patent numbered CN101149086A is investigated. The subject of this patent is a multipart carrier. The abutments have sharp edges and the abutment transition areas constructed raised sections. As a result, the cost is increased with usage of unnecessary components and assembly work.

### AIMS OF INVENTION

The first aim of the invention is to make the brake that was designed for 434 mm diameter rotor and 22.5 inch diameter wheel, suitable for 430 mm diameter rotor and 22.5 inch diameter wheel, by only changing carrier.

The other aim of invention is to reduce weight and cost by reducing the flange area.

The other aim of invention is to decrease the machining duration, the tool wear, the coolant consumption by rounded shape of the flange surface boundary, and to increase productivity.

The other aim of invention is to increase the strenght by creating a flat clamping surface instead of a spotted clamping section on the outboard bridge. Also strenght is increased by adding a support section to the outboard bridge. Also the bridge geometry was modified to increase the gap between carrier and rotor to increase the safety. The component strenght was increased by adding material to transition sections of the outboard bridge.

The other aim of invention is to reduce the weight and increase the strengh of the inboard bridge by adding material to transition sections and removing material from mid sections. Thus the stress concentrations are prevented by softening the transition geometries without increasing the weight.

In the invention, a geometry created by the combination of triangle and radius is used at the transition sections of abutments to avoid the strength reduction and to make a secure gap between carrier and pads.

In the invention, the weight reduction sections were enlarged to reduce the weight and cost without reducing the strenght.

The other aim of invention is, to increase the strenght of carrier by adding supports on the sides that the directions of stress vectors suddenly changes on.

The other aim of invention is, to reduce the weight and machining cost by removing the sharp edges on the top of the abutments.

Said invention relates to increasing the safety and production efficiency and also decreasing the total weight of the component and cost, also increasing the strenght by means of innovations on air disc brake carrier and abutments on carrier, triangular abutment surfaces, outboard bridge, flat clamping surface on ourboard bridge, carrier flange, weight saving sections, bridge transition sections, inboard bridge, side supports, abutment transition sections.

The other aim of invention is, to reduce the weight of the carrier. One of the most critical problems on the carrier is that the increase of the braking distance because of the residual heat on the carrier after heating on brake application. Therefore the carrier weight was reduced by adding supports and removing material. The heat transfer rate was boosted by increasing the surface area.

### FIGURES

Figure 1: A view of Air Disc Brake and mounting parts.
Figure 2: Front view of the carrier of the air disc brake.
Figure 3: Rear view of the carrier of the air disc brake.
Figure 4: Front view of the carrier of the air disc brake in current practice.
Figure 5: Rear view of the carrier of the air disc brake in current practice.
Figure 6: Comparative detailed views of the carrier of the air disc brake in current practice and in the invention.

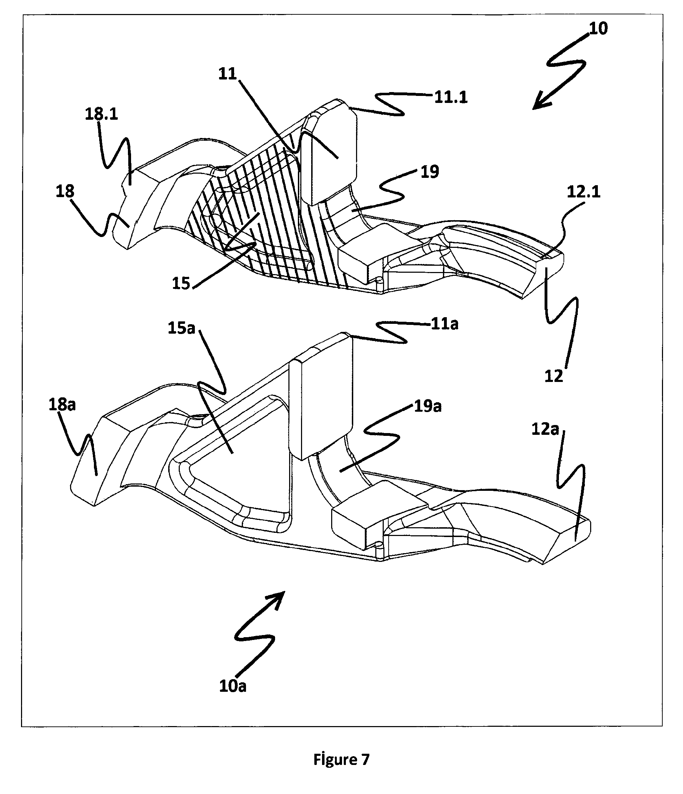

Figure 7: Detailed views of the carrier in current practice and in the invention, showing the mitigation gaps by hatched area.

### REFERANCE NUMBERS

- 10.: Carrier
- 10a.: Carrier in current practice
- 11.: Abutments
- 11.1.: Triangular face on abutments
- 11a.: Abutments in current practice
- 12.: Outboard bridge
- 12.1: Flat clamping surface on outboard bridge
- 12a.: Outboard bridge in current practice
- 12.1a.: Outboard bridge clamp spot in current practice
- 13.: Mounting flange
- 13a.: Mounting flange in current practice
- 14.: Guide sleeve mounting surface
- 14a.: Guide sleeve mounting surface in current practice
- 15.: Mitigation gaps
- 15a.: Mitigation gaps in current practice
- 16.: Inboard/Outboard bridge links
- 16a.: Inboard/Outboard bridge links in current practice
- 17.: Inboard bridge
- 17a.: Inboard bridge in current practice
- 18.: Side sections
- 18.1.: Side supports
- 18a.: Side sections in current practice
- 19.: Abutment transition
- 19a.: Abutment transition in current practice
- 20.: Torque plate
- 30.: Rotor
- 40.: Axle

- 50.: Hub
- 60.: Pads
- 70.: Caliper

### DETAILED EXPLANATION OF THE INVENTION

The invention includes, carrier (10), abutments (11), triangular face on abutments (11.1), outboard bridge (12), flat clamping surface (12.1) on outboard bridge (12), mounting flange (13), guide sleeve mounting surface (14), mitigation gaps (15), inboard/outboard bridge links(16), inboard bridge (17), side sections (18), side supports (18.1), abutment transition (19).

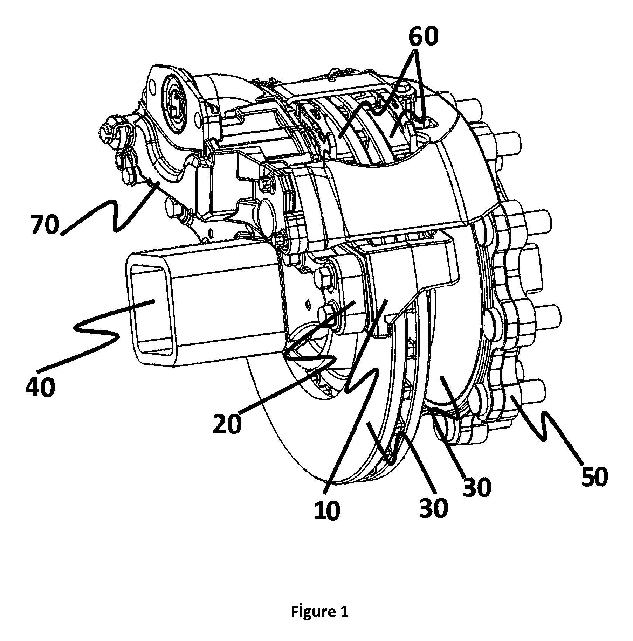

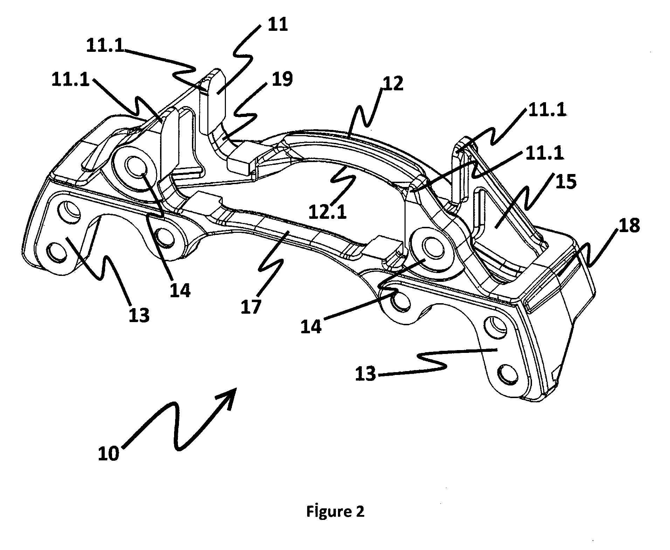

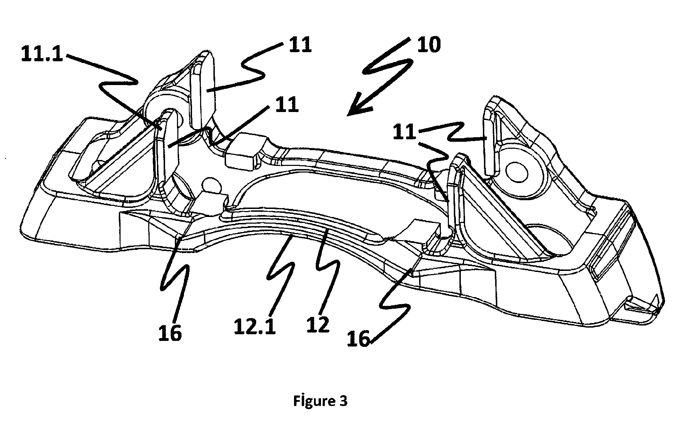

The carrier (10) that is shown on Figure 2 and Figure 3, is mounted on torque plate (20), that shown on Figure 1, by the holes on mounting flange (13). Also torque plate (20) is welded on axle (40). The mounting flange, which has a large contact area and appropriately positioned holes, are positioned on the torque plate (20) on the trailer axle (40). During brake application, The caliper (70) forces the pads (60) on the rotor (30) that rotates with the hub (50). As the pads (60) contact to the rotor (30), they move together, until the pads (60) contact with two abutments (11). Then, the pads (60) transmit the brake force to the carrier (10). The carrier (10) transmits brake force via the mounting flange (13) to the torque plate (20) and axle (40). The outboard bridge (12) that connects the left and right abutments (11) to each other, provides uniform stress distribution in the carrier (10). The geometry of the outboard bridge (12) is changed to prevent the contact between carrier (10) and rotor (30). So, the gap between carrier (10) and rotor (30) is increased.

When the brake is activated, the pads (60) between caliper (70) and rotor (30) touch the rotor (30) and create a friction force by movement of the caliper (70). The pads (60) move with the rotor (30) for about one mm, and touch the abutments (10) of the carrier (10) and transmit the friction force. The carrier (10) that is bolted on torque plate (20) which is welded on the axle (40), transmits the forces to the axle and the cycle is completed. The friction force increases, as increasing pressure that applied by the caliper (70) to the pads (60).

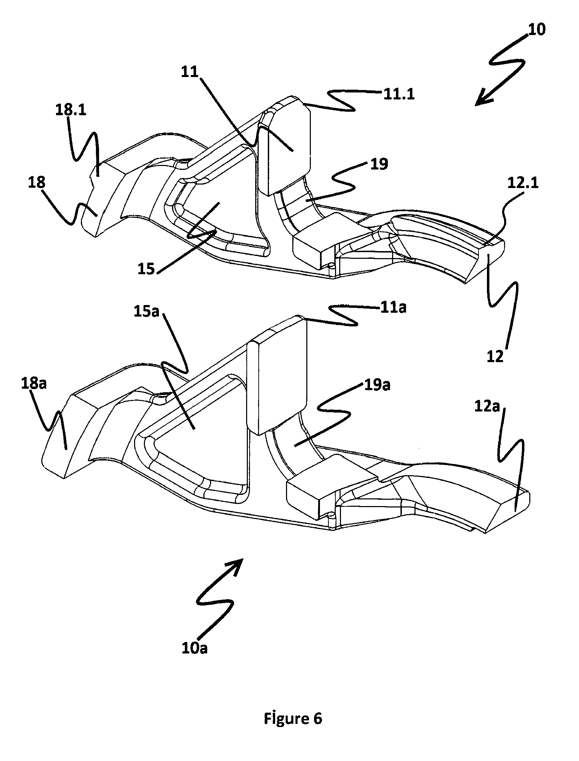

Views of the carrier in current practice are shown in Figure 4 and Figure 5. The detailed comparison of the carrier (10) and the carrier in current practice (10a) is shown in Figure 6. The features given in Figure 4 and Figure 6 are described as the carrier in current practice (10a), the abutments in current practice (11a), the outboard bridge in current practice (12a), the outside bridge clamp spot in current practice (12.1a), the mounting flange in current practice (13a), the guide sleeve mounting surface in current practice (14a), the mitigation gaps in current practice (15a), inboard/outboard bridge links in current practice (16a), the inboard bridge in current practice (17a), the side sections in current practice (18a) and the abutment transition in current practice (19a).

The mounting flange (13) on the carrier (10) shown in Figure 2 has less surface area than the mounting flange in practice (13a) on the carrier in practice (10a) shown in Figure 4. The surface boundary shape is not smooth on the mounting flange in practice (13a). In the invention, the mounting flange (13) surface has smooth boundary shape.

The strenght is reduced in the current practise because of the outboard bridge clamp spot (12.1a) on the outboard bridge (12a). In the invention, the outboard bridge flat clamp surface (12.1) is created instead of the outboard bridge clamp spot in current practice (12.1a) on the outboard bridge (12). Thus, the strenght is increased.

The cross section area of the inboard bridge (17) is increased near the mounting flange (13) in the invention. Also, material is removed from the centre of inboard bridge (17). Thus, the stress concentration sections are decreased and cross-sectional variation is softened without adding more material.

The mitigation gaps in current practice (15a) near the abutments in the current practice (11a) exist in a narrow area. Also, the abutment transitions in the current practice (19a) are softened with large radius section. Because of this, edges of pads come very close to the carrier in current practice (10a). If the abutment transitions in the current practice (19a) have narrow radius section, there would be stress concentration sections and the strenght would be lower. In the invention, the abutment transition (19) has triangular surface and radius combination. Thus, secure gap is created for the pads (60) and strenght reduction of the carrier (10) is prevented.

Mitigation gaps in the invention (15) decrease the weight and increase casting surface area of carrier without strenght reduction by enlargement of mitigation gap size in comparison with current practice (15a).

There is no side support (18.1) on the left or right sides (18a) of the carrier in the current practice (10a). In the invention, the side supports (18.1) are added on areas that the stress vector directions are suddenly changed.

There are sharp edges on the top of the abutments on the current practice (11a). In the invention, triangular faces (11.1) are formed on abutments (11), to reduce weight, to decrease casting and machining cost of the carrier.

## Claims

1. The invention relates to a braking device known as air disc brake that is used for safety on heavy commercial vehicles and trailers and the feature is to be **characterized by** inclusion of carrier (10) that connected to torque plate (20) in the device.

2. The braking device that is according to claim 1 **characterized in that**, abutments (11) that support the linings (60) have at least two triangular surface (11.1) at the top of abutments (11).

3. The braking device that is according to claim 1 **characterized in that**, features an outboard bridge section (12) that has at least one flat clamping surface (12.1) to increase strenght.

4. The braking device that is according to claim 1 **characterized in that**, features round bordered and lightened mounting flange (13) that allows the carrier (10) to be mounted on the axles (40) that 430mm brake rotors (30) are used.

5. The braking device that is according to claim 1 **characterized in that**, features at least two mitigation gap (15) that created by offsetting the border of area near the abutments (11) for reduction of carrier weight.

6. The braking device that is according to claim 1 **characterized in that**, features at least two side supports (18.1) to reduce stress concentration on sides (18) of carrier (10).

7. The braking device that is according to claim 1 **characterized in that**, features abutment transitions (19) that increase strenght and make a secure gap for pads (60), are created via triangular face with 115-125 degrees angle at the downside of the abutments (11).

8. The invention relates to a braking device known as air disc brake that is used for safety on heavy commercial vehicles and trailers and the feature is to be **characterized by**;
• inclusion of carrier (10) that connected to torque plate (20) in the device,
• abutments (11) that support the linings (60) have at least two triangular surface (11.1) at the top of abutments (11).
• an outboard bridge section (12) that has at least one flat clamping surface (12.1) to increase strenght,
• round bordered and lightened mounting flange (13) that allows the carrier (10) to be mounted on the axles (40) that 430mm brake rotors (30) are used,
• at least two mitigation gap (15) that created by offsetting the border of area near the abutments (11) for reduction of carrier weight,
• at least two side supports (18.1) to reduce stress concentration on sides (18) of carrier (10),
• abutment transitions (19) that increase strenght and make a secure gap for pads (60), are created via triangular face with 115-125 degrees angle at the downside of the abutments (11).
